# EUROPÄISCHE PATENTSCHRIFT

(11) **EP 0 757 211 B1**
(45) Veröffentlichungstag und Bekanntmachung des Hinweises auf die Patenterteilung: **25.09.2002**
(21) Anmeldenummer: 96111263.8
(22) Anmeldetag: 12.07.1996
(51) Int. Cl.: F24F 5/00

(54) **Wärmetauscherelement**
Heat exchanger element
Elément d'un échangeur de chaleur

(30) Priorität: 31.07.1995 DE 29512308 U
(43) Veröffentlichungstag der Anmeldung: 05.02.1997
(73) Patentinhaber: H KRANTZ-TKT GmbH, 51465 Bergisch Gladbach (DE)
(72) Erfinder: Weck, Franz, Dipl.-Ing., 52134 Herzogenrath (DE); Makulla, Detlef, Dipl.-Ing., 51491 Overath (DE)
(74) Vertreter: Bauer, Dirk, Dipl.-Ing. Dipl.-Kfm.

(56) Entgegenhaltungen:
- EP-A- 0 406 476
- DE-A- 3 908 108
- DE-A- 3 941 618
- DE-A- 4 020 970
- DE-U- 9 406 183

## Beschreibung

Die Erfindung betrifft ein Wärmetauscherelement, das aus einer Verkleidungsplatte, einem in Metallprofilen gehaltenen Kühlmittelkanal und mindestens einem Versteifungselement besteht. Dabei sind die Metallprofile mit dem Kühlmittelkanal einerseits durch die Verkleidungsplatte abgedeckt und andererseits von den sich über mindestens zwei benachbarte Metallprofile erstreckenden Versteifungselement überlagert.

Derartige Wärmetauscherelemente sind allgemein bekannt und werden beispielsweise als Kühlvorrichtungen in Deckenkonstruktionen verwendet, um Wärme aus Gebäuderäumen abzuführen. Auf der dem Gebäuderaum abgewandten Seite des Wärmetauscherelements sind an der vorzugsweise über ihre Grundfläche gleichmäßig perforierte Verkleidungsplatte Metallprofile so angeordnet und befestigt, daß sich mindestens ein in den Metallprofilen integrierbarer Kühlmittelkanal meanderförmig über die Rückseite der Verkleidungsplatte führen läßt. Die in aller Regel sehr dünnwandige Verkleidungsplatte neigt aufgrund ihres Eigengewichtes in Verbindung mit einer relativ großen, freien Spannweite zum Durchhängen. Dadurch wird nicht nur die Optik einer Raumdecke beeinträchtigt, sondern es geht auch der Kontakt zwischen den Metallprofilen und der Verkleidungsplatte über große Strecken verloren, was wiederum zu einer schlechten Wärmeübertragung zwischen der Verkleidungsplatte und den Metallprofilen führt und folglich die Kühlleistung eines derartigen Wärmetauscherelements reduziert. Deshalb ist es üblich, oberhalb der den Kühlmittelkanal fixierenden Metallprofile Versteifungselemente anzuordnen und durch diese die Durchbiegungsneigung der Verkleidungsplatte zu kompensieren. Funktionsgerechte Versteifungsprofile sind entweder verhältnismäßig kompliziert oder aber erfordern eine Vielzahl von Verbindungsmitteln, die an einer entsprechenden Vielzahl von Punkten an die Verkleidungsplatte angreifen.

Aus der EP 0 406 476 A2 ist eine Deckenverkleidung mit Wärmetauscherelementen der eingangs beschriebenen Art bekannt. Diese Deckenverkleidung besteht im wesentlichen aus Längsträgern und mit diesen verbundenen Querträgern, womit Rasterfelder erzeugt werden, in welche Verkleidungsplatten angeordnet werden. Oberhalb der Verkleidungsplatten sind als Wärmetauscher Metallprofile mit einem Kühlmittelkanal vorgesehen. Die Metallprofile werden mittels Magnetkraft an den Verkleidungsplatten und somit ebenso die Verkleidungsplatten an den Metallprofilen gehalten.

Die bekannte Deckenverkleidung läßt sich in besonders einfacher Weise montieren bzw. demontieren, da keine weiteren Verbindungseinrichtungen zwischen den Wärmetauscherelementen und den Verkleidungsplatten vorgesehen sind. Statt dessen wird bei der Montage der Verkleidungsplatten allein die Magnetkraft benutzt, um die Verkleidungsplatten in der vorgesehenen Position zu halten.

Ein wesentlicher Nachteil dieser bekannten Deckenverkleidung ist darin zu sehen, daß die zwischen den Metallprofilen mit dem Kühlmittelkanal einerseits und den Verkleidungsplatten andererseits vorgesehenen Magnete eine Durchbiegung der Verkleidungsplatten im mittleren Bereich zwischen zwei aufeinanderfolgenden Metallprofilen nicht verhindern können.

Der Erfindung liegt die Aufgabe zugrunde, ein Wärmetauscherelement der eingangs beschriebenen Art so auszubilden, daß unter Beibehaltung einer intensiven Verbindung zwischen der Verkleidungsplatte und den Metallprofilen mit dem Kühlmittelkanal die Gefahr einer Durchbiegung der Verkleidungsplatte über ihre gesamte Grundfläche ausgeschlossen ist, so daß jeder Bereich der Plattengrundfläche in einer einheitlichen Ebene gehalten wird.

DE-A-3941618 offenbart eine vorgefertigte Einheit aus Rohrleitungen, einer raumseitigen Verkleidungsplatte sowie flexiblen Magneten zum Andrücken der Rohrleitungen an die Verkleidungsplatte. Die Rohrleitungen sind in eine wärmeleitende Kontaktmasse eingebettet. Der Fachmann würde diese Schrift nicht in Erwägung ziehen um das Problem einer Durchbiegung der Verkleidungsplatte über ihre gesamte Grundfläche zu lösen, da die Magnete lediglich zum Andrücken der Rohrleitungen an die Verkleidungsplatte dienen und weil diese Schrift ein miniaturisiertes System betrifft (Abstand der Rohrleitungen von 10 bis 20 mm), wo das Problem der Durchbiegung der Verkleidungsplatte nicht auftaucht.

Ausgehend von einem Wärmetauscherelement der im Oberbegriff des Anspruchs 1 genannten Art wird diese Aufgabe erfindungsgemäß durch die im kennzeichnenden Teil des Anspruchs 1 angegebenen Merkmale gelöst.

Bei dem erfindungsgemäßen Wärmetauscher kann die Verkleidungsplatte auf ihrer Rückseite in konventioneller Weise mit Metallprofilen zur Aufnahme des Kühlmittelkanals ausgerüstet sein und vor oder bei der Montage durch die Metallprofile übergreifenden Versteifungsprofile ergänzt werden. Zur Durchbiegungsverhinderung der Verkleidungsplatte ist das Wärmetauscherelement lediglich noch um die zwischen der Verkleidungsplatte und dem Versteifungsprofil verteilt anzuordnenden Magnete zu vervollständigen.

Nach einer Ausgestaltung der Erfindung ist jeder Magnet kraft- und/oder formschlüssig an dem Versteifungselement oder an der Verkleidungsplatte befestigt.

Durch diese Ausgestaltung lassen sich die Magnete bereits bei der Vorfertigung der Versteifungselemente bzw. der Verkleidungsplatte daran in den erforderlichen Abständen sicher befestigen und erfordern bei der Montage des Wärmetauscherelements keinen weiteren Aufwand.

Je nach der Größe des Parallelabstandes zweier benachbarter Metallprofile reicht es zur Durchbiegungsverhinderung der Verkleidungsplatte aus, wenn zwischen diesen beiden Metallprofilen auf der Hälfte ihres Abstandes voneinander eine Reihe Magnete angeordnet ist und die Magnete in gleichmäßigen Abständen über die Längserstreckung der Metallprofile verteilt sind.

Schließlich sieht eine Ausgestaltung der Erfindung noch vor, daß das Versteifungselement aus einem der Verkleidungsplatte entsprechenden Bauteil oder aus einem starren Profil oder aus einem Spannbügel besteht.

Das Versteifungselement kann also beispielsweise aus einer ebenso wie die Verkleidungsplatte perforierten Platte gleichen Materials bestehen, so daß das Wärmetauscherelement auf beiden Seiten je eine plattenförmige Verkleidung aufweist und die beiden Verkleidungen durch Magnetkraft zusammengehalten werden. Das Versteifungselement kann aber auch aus einem starren Profil bestehen, das hinreichend biegesteif ist und durch die Magnetkraft die an sich durchbiegungsempfindliche Verkleidungsplatte in einer Ebene hält. Schließlich kann das Versteifungsprofil aber auch aus einem die Verkleidungsplatte in einer Ebene spannenden Bügel bestehen, so daß den Magneten die Funktion zukommt, eine durch die Spannkraft der Bügel nicht gänzlich verhinderte Durchbiegung ihrerseits zu verhindern.

In der Zeichnung sind zwei Ausführungsbeispiele eines erfindungsgemäßen Wärmetauscherelements in einem Teilquerschnitt dargestellt. Es zeigt:
- Figur 1: einen als Stegdoppelplatte ausgebildeten Wärmetauscher
und
- Figur 2: einen mit einem starren Versteifungsprofil ausgerüsteten Wärmetauscher.

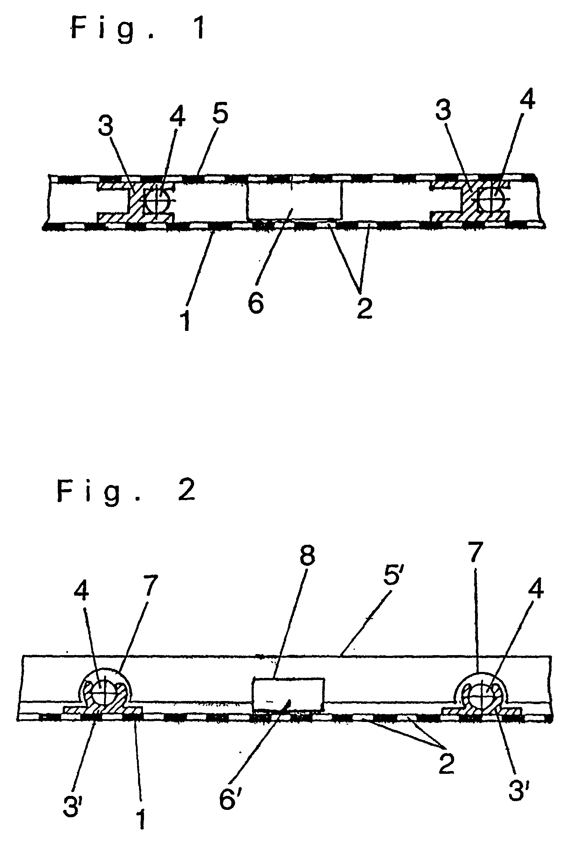

Gemäß Figur 1 besteht das Wärmetauscherelement aus einer Verkleidungsplatte 1, die in gleichmäßiger Verteilung über ihre Grundfläche mit Perforationen 2 versehen ist.

Auf der einem zu kühlenden Raum abgewandten Rückseite der Verkleidungsplatte 1 sind in parallelem Abstand doppel-T-förmige Metallprofile 3 festgeklebt oder anderweitig befestigt und umklammern einen Kühlmittelkanal 4, der meanderförmig über die Grundfläche der Verkleidungsplatte 1 verläuft.

Auf den Metallprofilen 3 ist auf ihrer der Verkleidungsplatte 1 abgewandten Seite als Versteifungselement 5 eine der Verkleidungplatte 1 entsprechend ausgebildete Platte angeklebt oder anderweitig befestigt.

Auf der Hälfte des Abstandes zwischen zwei benachbarten Metallprofilen 3 sind in gleichmäßigen Abständen über deren Längserstreckung verteilt Magnete 6 angeordnet, welche den senkrechten Abstand zwischen der Verkleidungsplatte 1 einerseits und dem Versteifungselement 5 andererseits überbrücken und durch die Magnetkraft eine Durchbiegung der Verkleidungsplatte 1 verhindern.

Gemäß Figur 2 besteht das Wärmetauscherelement gleichfalls aus einer Verkleidungsplatte 1 mit gleichmäßig über ihre Grundfläche verteilten Perforationen 2.

Auf der einen zu kühlenden Raum abgewandten Rückseite der Verkleidungsplatte 1 sind in parallelem Abstand C-förmige Metallprofile 3' befestigt, in welche jeweils ein Kühlmittelkanal 4 einklipsbar ist, der sich wiederum meanderförmig über die Grundfläche der Verkleidungsplatte 1 erstreckt.

Auf den Metallprofilen 3' sind in Abständen über deren Längserstreckung profilierte Versteifungselemente 5' befestigt und so angeordnet, daß sie die Metallprofile 3' rechtwinklig kreuzen. Ausnehmungen 7 in den Versteifungselementen 5' sind den Metallprofilen 3' so angepaßt, daß sich die Versteifungselemente 5' auf die Metallprofile 3' aufklemmen lassen.

Jeweils mittig zwischen zwei benachbarten Ausnehmungen 7 ist in jedem Versteifungselement 5' eine Einfassung 8 für die Aufnahme eines Magneten 6' ausgespart. Der Magnet 6' steht über die Unterseite des Versteifungselements 5' so weit vor, daß er mit der Oberseite der gestreckten Verkleidungsplatte 1 in Kontakt ist und deren Durchbiegung dauerhaft verhindert.

## Patentansprüche

1. Wärmetauscherelement bestehend aus einer Verkleidungsplatte, einem in Metallprofilen gehaltenen Kühlmittelkanal und mindestens einem Versteifungselement, wobei die Metallprofile mit dem Kühlmittelkanal einerseits durch die Verkleidungsplatte abgedeckt und andererseits von dem sich über mindestens zwei benachbarte Metallprofile erstreckenden Versteifungselement überlagert sind, **dadurch gekennzeichnet, daß** zwischen zwei Metallprofilen (3, 3') mindestens ein die Verkleidungsplatte (1) gegen das Versteifungselement (5, 5') ziehender Magnet (6, 6') angeordnet ist.

2. Wärmetauscherelement nach Anspruch 1, **dadurch gekennzeichnet, daß** jeder Magnet (6, 6') kraft- und/oder formschlüssig an dem Versteifungselement (5, 5') oder an der Verkleidungsplatte (1) befestigt ist.

3. Wärmetauscherelement nach Anspruch 1 oder 2, **dadurch gekennzeichnet, daß** zwischen zwei Metallprofilen (3, 3') auf der Hälfte ihres Abstandes voneinander eine Reihe Magnete (6, 6') angeordnet ist und die Magnete (6, 6') in gleichmäßigen Abständen über die Längserstreckung der Metallprofile (3, 3') verteilt sind.

4. Wärmetauscherelement nach einem der Ansprüche 1 bis 3, **dadurch gekennzeichnet, daß** das Versteifungselement (5, 5') aus einem der Verkleidungsplatte (1) entsprechenden Bauteil oder aus einem starren Profil oder aus einem spannbaren Bügel besteht.

## Claims

1. A heat-exchanger element comprising a covering panel, a coolant duct carried in metal profiles and at least one bracing element, the metal profiles with the coolant duct being covered on one side by the covering panel and on the other side by the bracing element which extends over at least two adjacent metal profiles, **characterized in that** at least one magnet (6, 6'), drawing the covering panel (1) towards the bracing element (5, 5'), is disposed between two metal profiles (3, 3').

2. A heat-exchanger element according to Claim 1, **characterized in that** each magnet (6, 6') is fixed positively and/or non-positively to the bracing element (5, 5') or to the covering panel (1).

3. A heat-exchanger element according to Claim 1 or 2, **characterized in that** a row of magnets (6, 6') is disposed half-way between two metal profiles (3, 3'), and the magnets (6, 6') are distributed at regular intervals over the longitudinal extension of the metal profiles (3, 3').

4. A heat-exchanger element according to one of Claims 1 to 3, **characterized in that** the bracing element (5, 5') consists of a structural component matching the covering panel (1) or of a rigid profile or tensile strap.

## Revendications

1. Elément d'échangeur de chaleur constitué d'une plaque d'habillage, d'un canal pour de l'agent de refroidissement maintenu dans des profilés métalliques et d'au moins d'un élément de raidissement, les profilés métalliques avec le canal du fluide de refroidissement d'une part étant recouverts par la plaque d'habillage et d'autre part étant surmontés de l'élément de raidissement s'étendant sur au moins deux profilés métalliques voisins, **caractérisé en ce qu'**il est prévu entre deux profilés (3,3') métalliques au moins un aimant (6,6') attirant la plaque (1) d'habillage sur l'élément (5,5') de raidissement.

2. Elément d'échangeur de chaleur suivant la revendication 1, **caractérisé en ce que** chaque aimant (6,6') est fixé à coopération de force et/ou à complémentarité de forme sur l'élément (5,5') de raidissement ou sur la plaque (1) d'habillage.

3. Elément d'échangeur de chaleur suivant la revendication 1 ou 2, **caractérisé en ce qu'**il est prévu entre deux profilés (3,3') métalliques sur la moitié de leur intervalle entre une série d'aimants (6,6') et ces aimants (6,6') sont répartis d'une manière équidistante sur l'étendue en longueur des profilés (3,3') métalliques.

4. Elément d'échangeur de chaleur suivant l'une des revendications 1 à 3, **caractérisé en ce que** l'élément (5,5') de raidissement est constitué d'un élément correspondant à la plaque (1) d'habillage ou d'un profilé rigide ou d'un étrier qui peut être serré.
